# EUROPEAN PATENT APPLICATION

(11) **EP 4 303 966 A1**
(43) Date of publication of application: **10.01.2024**
(21) Application number: 22763376.5
(22) Date of filing: 03.03.2022
(51) Int. Cl.: H01M 4/86, H01M 8/10

(54) **MEMBRANE ELECTRODE ASSEMBLY AND SOLID-POLYMER FUEL CELL**

(30) Priority: 03.03.2021 JP 2021033802
(71) Applicant: TOPPAN INC., Tokyo 110-0016 (JP)
(72) Inventor: CHINONE Hiroyuki, Tokyo 110-0016 (JP)
(74) Representative: Hoffmann Eitle
(86) International application number: PCT/JP2022/009083
(87) International publication number: WO 2022/186323

(57) **Abstract**

A membrane electrode assembly includes: a polymer electrolyte membrane; a pair of electrode catalyst layers in contact with the surfaces of the polymer electrolyte membrane with the polymer electrolyte membrane therebetween; and a gas diffusion layer laminated on each of the pair of electrode catalyst layers. Each electrode catalyst layer includes catalytic substances, carbon particles, polymer electrolyte aggregates, and fibrous substances, and the gas diffusion layer has a Gurley value, which represents the air permeability in the thickness direction, of 1.0 second or more and 3.0 seconds or less.

## Description

### [Technical Field]

The present disclosure relates to a membrane electrode assembly and a polymer electrolyte fuel cell.

### [Background Art]

Fuel cells have attracted attention as cells that contribute to solving environmental and energy problems. Fuel cells generate electric power using a chemical reaction between a fuel such as hydrogen and an oxidant such as oxygen. Among fuel cells, polymer electrolyte fuel cells, which can operate at low temperatures and be compact, are expected to be used as power supplies such as portable power supplies, household power supplies, and on-vehicle power supplies.

A polymer electrolyte fuel cell includes a membrane electrode assembly including a fuel electrode as an anode, an air electrode as a cathode, and a polymer electrolyte membrane sandwiched between the fuel electrode and the air electrode. The fuel electrode and the air electrode each include a laminate of an electrode catalyst layer and a gas diffusion layer. The fuel electrode is supplied with a fuel gas containing hydrogen, and the air electrode is supplied with an oxidant gas containing oxygen. As a result, the electrode reactions expressed in formula 1 and formula 2 below occur at the fuel electrode and the air electrode to generate electric power.

Fuel electrode: H₂ -> 2H⁺ + 2e⁻ ... (formula 1)

Air electrode: 1/2O₂ + 2H⁺ + 2e⁻ -> H₂O ... (formula 2)

That is, as expressed in formula 1, protons and electrons are generated from the fuel gas supplied to the fuel electrode through the action of the catalyst included in the electrode catalyst layer. The protons are transferred by the polymer electrolyte contained in the electrode catalyst layer and the polymer electrolyte membrane, and migrate through the polymer electrolyte membrane to the air electrode. The electrons are extracted from the fuel electrode to an external circuit, and migrate through the external circuit to the air electrode. At the air electrode, as expressed in formula 2, the oxidant gas reacts with the protons and electrons migrating from the fuel electrode to generate water. Thus, as the electrons pass through the external circuit, an electric current is produced (for example, see PTL 1).

A typical electrode catalyst layer includes a carbon material carrying catalytic substances such as platinum, and a polymer electrolyte. The carbon material contributes to the conduction of electrons, and the polymer electrolyte contributes to the conduction of protons. Accordingly, the types and percentages of the carbon material and the polymer electrolyte are significant factors for improving the power generation performance of the polymer electrolyte fuel cell. Furthermore, in the electrode catalyst layer, improvements in the gas diffusion properties and the drainage properties for the water produced by power generation also contribute to an improvement in the power generation performance.

Meanwhile, a gas diffusion layer is involved in the supply of gas to the electrode catalyst layer, the collection of electrons produced in an electrode reaction, and control of the quantity of water in the cell through drainage of water generated during power generation. Accordingly, the properties of the gas diffusion layer are also significant factors for improving the power generation performance of the polymer electrolyte fuel cell.

### [Citation List]

### [Patent Literature]

PTL 1: JP 2003-115299 A

### [Summary of the Invention]

### [Technical Problem]

When an electrode catalyst layer is produced, the electrode catalyst layer may crack due to shrinkage caused by drying. With cracking in an electrode catalyst layer, the polymer electrolyte membrane is exposed through cracks in the membrane electrode assembly. This exposure of the polymer electrolyte membrane reduces the durability of the membrane electrode assembly and the power generation performance of the polymer electrolyte fuel cell.

The electrical resistance of a gas diffusion layer is also a factor that affects the power generation performance. The electrical resistance of a gas diffusion layer varies depending on, for example, the materials, thickness, and density of the gas diffusion layer. In particular, the thickness of the gas diffusion layer may vary within the gas diffusion layer or fluctuate depending on the water retention state of the membrane electrode assembly during the drive of the fuel cell. Thus, when the electrical resistance of the gas diffusion layer affects the power generation performance greatly, stability of the power generation performance cannot be easily attained.

### [Solution to Problem]

A membrane electrode assembly for solving the above problem includes a polymer electrolyte membrane; a pair of electrode catalyst layers with the polymer electrolyte membrane therebetween, the electrode catalyst layers being in contact with surfaces of the polymer electrolyte membrane; and a gas diffusion layer laminated on each of the pair of electrode catalyst layers. Each of the pair of electrode catalyst layers includes catalytic substances, carbon particles, polymer electrolyte aggregates, and fibrous substances; and the gas diffusion layer has a Gurley value of 1.0 second or more and 3.0 seconds or less, the Gurley value representing air permeability in a thickness direction.

In the aforementioned configuration, since the electrode catalyst layers include the fibrous substances, the strength of the electrode catalyst layers is increased and cracking is suppressed. In addition, the gas diffusion layer has sufficiently high air permeability, which provides sufficient gas diffusion properties and drainage properties, thus reducing the effect of the electrical resistance of the gas diffusion layer on the power generation performance of the fuel cell. Accordingly, stable power generation performance is achieved regardless of any unevenness in the electrical resistance.

A polymer electrolyte fuel cell for solving the above problem includes: the membrane electrode assembly; and a pair of separators with the membrane electrode assembly therebetween.

The aforementioned configuration enables high power generation performance to be consistently achieved.

### [Advantageous Effects of the Invention]

The present disclosure enables cracking in the electrode catalyst layers to be prevented and high power generation performance to be consistently achieved.

### [Brief Description of the Drawings]

Fig. 1 is a view of a membrane electrode assembly according to an embodiment illustrating a cross-sectional structure of the membrane electrode assembly.
Fig. 2 is a schematic view illustrating a first configuration of an electrode catalyst layer according to the embodiment.
Fig. 3 is a schematic view illustrating a second configuration of the electrode catalyst layer according to the embodiment.
Fig. 4 is an exploded perspective view of a polymer electrolyte fuel cell according to the embodiment.

### [Description of the Embodiments]

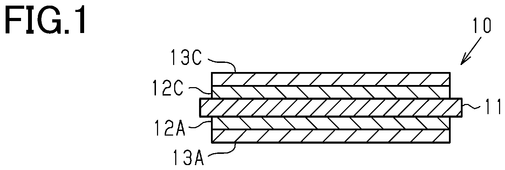

An embodiment of a membrane electrode assembly and a polymer electrolyte fuel cell will be described with reference to Figs. 1 to 4. It should be appreciated that the expression "at least one of A and B" herein means A alone, B alone, or both A and B.

### [Membrane Electrode Assembly]

The configuration of the membrane electrode assembly will be described with reference to Figs. 1 to 3.

As illustrated in Fig. 1, a membrane electrode assembly 10 includes a polymer electrolyte membrane 11, a pair of electrode catalyst layers, and a pair of gas diffusion layers. The pair of electrode catalyst layers consists of a fuel electrode catalyst layer 12A and an air electrode catalyst layer 12C. The pair of gas diffusion layers consists of a fuel electrode diffusion layer 13A and an air electrode diffusion layer 13C.

The polymer electrolyte membrane 11 is sandwiched between the fuel electrode catalyst layer 12A and the air electrode catalyst layer 12C. The fuel electrode catalyst layer 12A is in contact with one of the two surfaces of the polymer electrolyte membrane 11, and the air electrode catalyst layer 12C is in contact with the other of the two surfaces of the polymer electrolyte membrane 11.

The fuel electrode diffusion layer 13A is laminated on the fuel electrode catalyst layer 12A, and the air electrode diffusion layer 13C is laminated on the air electrode catalyst layer 12C. In other words, the laminate of the polymer electrolyte membrane 11, the fuel electrode catalyst layer 12A, and the air electrode catalyst layer 12C is sandwiched between the fuel electrode diffusion layer 13A and the air electrode diffusion layer 13C.

The fuel electrode catalyst layer 12A and the fuel electrode diffusion layer 13A form a fuel electrode serving as the anode of the polymer electrolyte fuel cell. The air electrode catalyst layer 12C and the air electrode diffusion layer 13C form an air electrode serving as the cathode of the polymer electrolyte fuel cell.

As viewed from a position facing one surface of the polymer electrolyte membrane 11, the fuel electrode catalyst layer 12A, the air electrode catalyst layer 12C, the fuel electrode diffusion layer 13A, and the air electrode diffusion layer 13C have substantially the same outer shape. The polymer electrolyte membrane 11 has an outer shape larger than the outer shape of the catalyst layers 12A and 12C and the diffusion layers 13A and 13C. The outer shape of the polymer electrolyte membrane 11 and the outer shapes of the catalyst layers 12A and 12C and the diffusion layers 13A and 13C are not limited to a particular form, and may be, for example, rectangular.

The polymer electrolyte membrane 11 includes a polymer electrolyte. The polymer electrolyte used for the polymer electrolyte membrane 11 may be any polymer electrolyte having proton conductivity, and may be, for example, a fluoropolymer electrolyte or a hydrocarbon polymer electrolyte. Examples of the fluoropolymer electrolyte include Nafion (registered trademark, manufactured by DuPont), Flemion (registered trademark, manufactured by Asahi Glass Co., Ltd.), Aciplex (registered trademark, manufactured by Asahi Kasei Corporation), and Aquivion (registered trademark, manufactured by Solvay). Examples of the hydrocarbon polymer electrolyte include sulfonated polyether ketones, sulfonated polyether sulfones, sulfonated polyether ether sulfones, sulfonated polysulfides, sulfonated polyphenylenes, sulfonated polyimides, and acid-doped polybenzoazoles.

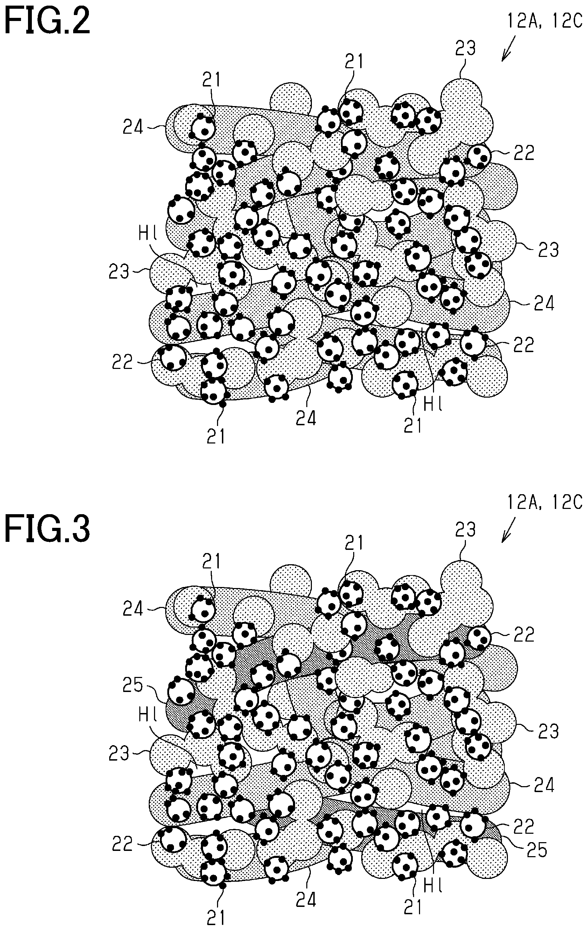

Fig. 2 schematically illustrates a first configuration of an electrode catalyst layer according to the present embodiment. As illustrated in Fig. 2, the fuel electrode catalyst layer 12A and the air electrode catalyst layer 12C each include catalytic substances 21, carbon particles 22, polymer electrolyte aggregates 23, and polymer electrolyte fibers 24 that are fibrous polymer electrolytes. In the catalyst layers 12A and 12C, the aggregates 23 and the polymer electrolyte fibers 24 are positioned around the dispersed carbon particles 22, and pores Hl are formed between these components.

Examples of the catalytic substance 21 include: platinum group elements such as platinum, palladium, ruthenium, iridium, rhodium, and osmium; metals such as iron, lead, copper, chromium, cobalt, nickel, manganese, vanadium, molybdenum, gallium, and aluminum; and alloys, oxides, or double oxides thereof. In particular, the catalytic substance 21 is preferably platinum or platinum alloy. The catalytic substances 21 are particulate and preferably have a mean particle diameter of 0.5 nm or more and 20 nm or less, and more preferably 1 nm or more and 5 nm or less. The mean particle diameter of the catalytic substances 21 being greater than or equal to the aforementioned lower limit increases the catalytic stability, while the mean particle diameter of the catalytic substances 21 being smaller than or equal to the aforementioned upper limit increases the catalytic activity.

The carbon particles 22 may be any particulate and electrically conductive carriers that are not attacked by the catalyst. Examples of carbon materials used as the carbon particles 22 include powdered carbon materials such as carbon black, graphite, black lead, activated carbon, carbon nanotubes, and fullerene. The carbon particles 22 preferably have a mean particle diameter of 10 nm or more and 1,000 nm or less, and more preferably 10 nm or more and 100 nm or less. When the mean particle diameter of the carbon particles 22 is greater than or equal to the aforementioned lower limit, electron conduction paths are more likely to be formed in the electrode catalyst layers, and when the mean particle diameter of the carbon particles 22 is less than or equal to the aforementioned upper limit, the electrode catalyst layers may be formed thin enough that electrical resistance does not become excessive, thus preventing a decrease in the output of the fuel cell.

The catalytic substances 21 are preferably supported on the carbon particles 22. The particulate form of the carbon materials on which the catalytic substances 21 are supported can increase the area of the carbon materials on which the catalytic substances 21 can be supported, allowing the catalytic substances 21 to be densely supported on the carbon materials. This enables the catalytic activity to be improved.

The polymer electrolyte aggregate 23 is a mass of polymer electrolytes that are ionomers and aggregated by cohesive forces. The cohesive forces include the Coulomb force or the van der Waals force between the ionomers. The polymer electrolyte fiber 24 is a polymer electrolyte having a shape elongated by, for example, crosslinking.

The polymer electrolytes included in the aggregate 23 and the polymer electrolyte fiber 24 may be any polymer electrolytes having proton conductivity, such as a fluoropolymer electrolyte and a hydrocarbon polymer electrolyte. Examples of the fluoropolymer electrolyte include Nafion (registered trademark, manufactured by DuPont), Flemion (registered trademark, manufactured by Asahi Glass Co., Ltd.), Aciplex (registered trademark, manufactured by Asahi Kasei Corporation), and Aquivion (registered trademark, manufactured by Solvay). Examples of the hydrocarbon polymer electrolyte include sulfonated polyether ketones, sulfonated polyether sulfones, sulfonated polyether ether sulfones, sulfonated polysulfides, sulfonated polyphenylenes, sulfonated polyimides, and acid-doped polybenzoazoles.

The polymer electrolytes included the aggregate 23 and the polymer electrolytes included in the polymer electrolyte fiber 24 may be the same or different from each other. The polymer electrolytes included in each of the aggregate 23 and the polymer electrolyte fiber 24, and the polymer electrolytes included in the polymer electrolyte membrane 11 may be the same or different from each other. In order to enhance the adhesion of the catalyst layers 12A and 12C to the polymer electrolyte membrane 11, the polymer electrolytes included in the catalyst layers 12A and 12C are preferably the same materials as the polymer electrolytes included in the polymer electrolyte membrane 11.

With the polymer electrolyte fibers 24 included in the catalyst layers 12A and 12C, the polymer electrolyte fibers 24 are entangled with each other to serve as a support in the electrode catalyst layers, thus reducing cracking in the catalyst layers 12A and 12C. Therefore, the catalyst layers 12A and 12C are less likely to crack than a conventional electrode catalyst layer composed of the carbon particles 22 on which the catalytic substances 21 are supported and the polymer electrolyte aggregates 23.

The polymer electrolyte fibers 24 preferably have a mean fiber diameter of 2 µm or less, and more preferably 0.1 µm or less. When the mean fiber diameter is within the above range, the polymer electrolyte fibers 24 having the fiber diameter are thin enough to be included in the catalyst layers 12A and 12C.

In order to improve the output of the polymer electrolyte fuel cell, it is desirable that the gas supplied to the catalyst layers 12A and 12C be appropriately diffused in the catalyst layers 12A and 12C through the pores Hl in the catalyst layers 12A and 12C, and especially in the air electrode, that the water generated in the electrode reaction be appropriately drained through the pores Hl. The pores Hl facilitate formation of the interface between the gas, the catalyst, and the polymer electrolytes, promoting the electrode reaction. This also contributes to an improvement in the output of the polymer electrolyte fuel cell.

In view of the above, the catalyst layers 12A and 12C preferably have an appropriate size and number of pores Hl. When the polymer electrolyte fibers 24 have a mean fiber diameter of 1 µm or less, sufficient gaps are formed in the structure of the electrode catalyst layer in which the polymer electrolyte fibers 24 are entangled with each other, and sufficient pores Hl are formed, thus contributing to an improvement in the output of the fuel cell. Furthermore, when the polymer electrolyte fibers 24 have a mean fiber diameter of 100 nm or more and 500 nm or less, the output of the fuel cell is particularly increased.

The polymer electrolyte fibers 24 have a mean fiber length greater than the mean fiber diameter, and the mean fiber length is preferably 1 µm or more and 200 µm or less, and more preferably 1 µm or more and 150 µm or less. When the mean fiber length is within the above range, the aggregation of the polymer electrolyte fibers 24 in the catalyst layers 12A and 12C is regulated, facilitating formation of the pores Hl. In addition, when the mean fiber length is within the above range, the polymer electrolyte fibers 24 are entangled appropriately in the catalyst layers 12A and 12C, and this structure increases the strength of the catalyst layers 12A and 12C and also the effectiveness of suppression of cracking.

The total mass of the polymer electrolyte fibers 24 included in the catalyst layers 12A and 12C is preferably 0.01 times or more and 3.0 times or less the total mass of the carbon particles 22 included in the catalyst layers 12A and 12C. When the mass ratio between the carbon particles 22 and the polymer electrolyte fibers 24 is within the above range, the proton conduction in the catalyst layers 12A and 12C is promoted, thus contributing to an improvement in the output of the polymer electrolyte fuel cell.

Fig. 3 schematically illustrates a second configuration of the electrode catalyst layer according to the present embodiment. As illustrated in Fig. 3, each of the fuel electrode catalyst layer 12A and the air electrode catalyst layer 12C may also include carbon fibers 25 in addition to the catalytic substances 21, the carbon particles 22, the polymer electrolyte aggregates 23, and the polymer electrolyte fibers 24.

The carbon fiber 25 is a fibrous structure composed of carbon. Examples of carbon materials used as the carbon fibers 25 include fibrous carbon materials such as carbon fibers, carbon nanofibers, and carbon nanotubes. In particular, carbon nanofibers or carbon nanotubes are preferably used.

The carbon fibers 25 preferably have a mean fiber diameter of 0.1 µm or less. When the mean fiber diameter is 0.1 µm or less, the carbon fibers 25 having this fiber diameter are thin enough to be included in the catalyst layers 12A and 12C.

The carbon fibers 25 preferably have a mean fiber length of 1 µm or more and 200 µm or less. When the mean fiber length of the carbon fibers 25 is within the above range, the polymer electrolyte fibers 24 and the carbon fibers 25 are entangled appropriately in the catalyst layers 12A and 12C, and this structure increases the strength of the catalyst layers 12A and 12C and also the effectiveness of suppression of cracking.

In the second configuration, the fibrous substances that are the polymer electrolyte fibers 24 and the carbon fibers 25 are entangled with each other to serve as a support in the catalyst layers 12A and 12C, thus reducing cracking in the catalyst layers 12A and 12C similarly to the first configuration. In the second configuration, the carbon fibers 25 may carry the catalytic substances 21. Alternatively, the carbon particles 22 and the carbon fibers 25 may each carry the catalytic substances 21. However, with the catalytic substances 21 supported on the carbon particles 22, the gaps formed by the carbon fibers 25 preferably serve as drainage paths for the water produced by power generation, improving the drainage properties of the catalyst layers 12A and 12C.

The catalyst layers 12A and 12C may include only the carbon fibers 25 as fibrous substances, and may not include the polymer electrolyte fibers 24. Also in this form, the carbon fibers 25 are entangled with each other, and the resultant structure can reduce cracking. However, the carbon fibers 25 contribute only to electron conduction and not to proton conduction, and thus when the catalyst layers 12A and 12C include only the carbon fibers 25 as fibrous substances, the proportion of the polymer electrolytes included in the catalyst layers 12Aand 12C lowers, reducing the proton conductivity of the catalyst layers 12A and 12C. Although the amount of the polymer electrolyte aggregates 23 may be increased to compensate for the proton conductivity, the increase in the amount of the aggregates 23 reduces the pores Hl, lowering the gas diffusion properties and the drainage properties.

In contrast, the form with the catalyst layers 12A and 12C including the polymer electrolyte fibers 24 as fibrous substances can promote the proton conduction in the catalyst layers 12A and 12C with the pores Hl maintained, compared with the form in which only the carbon fibers 25 are included as fibrous substances.

Furthermore, in order to extract electrons produced in an electrode reaction, the catalyst layers 12A and 12C need electron conductivity. When the catalyst layers 12A and 12C include the polymer electrolyte fibers 24 and the carbon fibers 25 as fibrous substances, the proton conductivity and the electron conductivity of the catalyst layers 12A and 12C and the formation of the pores Hl are suitable, thus improving the output of the polymer electrolyte fuel cell.

The mean fiber diameters and the mean fiber lengths of the polymer electrolyte fibers 24 and the carbon fibers 25 can be measured by, for example, observing a cross section of the electrode catalyst layer with a scanning electron microscope. For example, the mean fiber diameter is the mean of the maximum diameters of the fibers contained in three or more 30 µm by 30 µm measurement areas in the above-described cross section. Furthermore, for example, the mean fiber length is the mean of the maximum lengths of the fibers contained in three or more 30 µm by 30 µm measurement areas in the above-described cross section.

The diffusion layers 13A and 13C may be, for example, carbon cloth, carbon paper, or nonwoven fabric. The diffusion layers 13A and 13C may be rendered water repellent. The diffusion layers 13A and 13C have a Gurley value, which represents the air permeability in the thickness direction, of 1.0 second or more and 3.0 seconds or less. In particular, the Gurley value of the diffusion layers 13A and 13C is preferably 1.0 second. The Gurley value is the time required for a defined volume of air to permeate a specified area at a specified pressure differential. The value is a parameter expressed as the time per 100 mL and measured by the measurement method defined in JIS P8117: 2009.

When the Gurley value of the diffusion layers 13A and 13C is 1.0 second or more and 3.0 seconds or less, the diffusion layers 13A and 13C have appropriate gas diffusion properties and water drainage properties. This results in a reduction in the effect of the level of the electrical resistance of the diffusion layers 13Aand 13C on the power generation performance of the polymer electrolyte fuel cell. Thus, for example, even when the diffusion layers 13A and 13C have uneven electrical resistance due to variations in the thickness of the diffusion layers 13A and 13C or changes in the thickness of the diffusion layers 13A and 13C during driving of the fuel cell, the effect of the uneven electrical resistance on the power generation performance can be reduced. This improves the stability of the power generation performance of the polymer electrolyte fuel cell.

The diffusion layers 13A and 13C may each be composed of a single layer or multiple layers. For example, the diffusion layers 13A and 13C may each be a laminate of a carbon substrate such as carbon cloth or carbon paper and a microporous layer that is a layer made of a porous material. The material for the microporous layer is, for example, a mixture of a fluorocarbon polymer such as polytetrafluoroethylene (PTFE), perfluoroethylene propylene copolymer (FEP), or ethylene-tetrafluoroethylene copolymer (ETFE) and a carbon material such as carbon black particles, carbon fiber, or graphite.

The Gurley value of the diffusion layers 13A and 13C may be adjusted based on, for example, the material and thickness of the diffusion layers 13A and 13C or the ratio of gaps in the diffusion layers 13Aand 13C.

### [Polymer Electrolyte Fuel Cell]

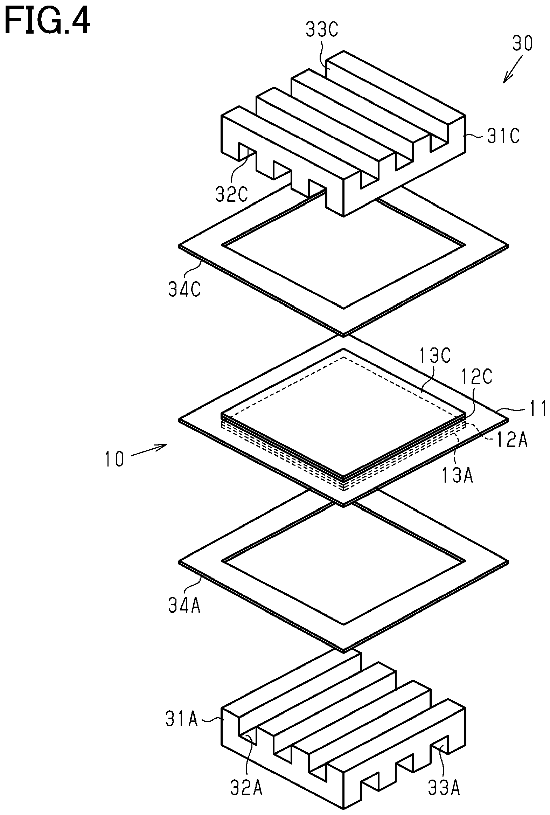

The configuration of the polymer electrolyte fuel cell including the above-described membrane electrode assembly 10 will be described with reference to Fig. 4.

As illustrated in Fig. 4, a polymer electrolyte fuel cell 30 includes the membrane electrode assembly 10 and a pair of separators 31Aand 31C. The polymer electrolyte fuel cell 30 may further include a pair of gaskets 34A and 34C.

The membrane electrode assembly 10 is sandwiched between the separator 31A and the separator 31C. The separators 31A and 31C are formed from a material that is electrically conductive and impermeable to gas. The separator 31A faces the fuel electrode diffusion layer 13A, and the separator 31C faces the air electrode diffusion layer 13C. The separator 31Ahas a gas flow channel 32A formed in the surface facing the fuel electrode diffusion layer 13A, and has a coolant flow channel 33A formed in the surface facing away from the fuel electrode diffusion layer 13A. Similarly, the separator 31C has a gas flow channel 32C formed in the surface facing the air electrode diffusion layer 13C, and has a coolant flow channel 33C formed in the surface facing away from the air electrode diffusion layer 13C.

The gasket 34A surrounds the outer periphery of the fuel electrode catalyst layer 12A and the fuel electrode diffusion layer 13A between the polymer electrolyte membrane 11 and the separator 31A. The gasket 34C surrounds the outer periphery of the air electrode catalyst layer 12C and the air electrode diffusion layer 13C between the polymer electrolyte membrane 11 and the separator 31C. The gaskets 34A and 34C have the function of preventing the gas supplied to the catalyst layers 12A and 12C and the diffusion layers 13A and 13C from leaking out of the polymer electrolyte fuel cell 30. The gaskets 34A and 34C may each be a component of the membrane electrode assembly 10.

When the polymer electrolyte fuel cell 30 is used, a fuel gas such as hydrogen flows through the gas flow channel 32A in the separator 31A, and an oxidant gas such as oxygen flows through the gas flow channel 32C in the separator 31C. In addition, a coolant flows through the coolant flow channels 33A and 33C in the separators 31A and 31C. Then, when the fuel gas is supplied from the gas flow channel 32A to the fuel electrode, and the oxidant gas is supplied from the gas flow channel 32C to the air electrode, an electrode reaction progresses to generate an electromotive force between the fuel electrode and the air electrode. The fuel electrode may be supplied with an organic fuel such as methanol.

The polymer electrolyte fuel cell 30 may be used as a single cell as illustrated in Fig. 4 or may be used as a single fuel cell in which multiple polymer electrolyte fuel cells 30 are laminated and connected in series.

### [Method for Producing Membrane Electrode Assembly]

A method for producing the membrane electrode assembly 10 will be described.

The catalyst layers 12A and 12C are formed by applying catalyst layer slurry containing the materials for the catalyst layers 12A and 12C onto a substrate and drying the resultant coating.

The catalyst layer slurry is prepared by mixing, in a solvent, polymer electrolyte powder or an electrolyte containing dissolved or dispersed polymer electrolyte powder, the catalytic substance 21, the carbon particle 22, and the polymer electrolyte fiber 24. The polymer electrolyte fiber 24 may be formed by, for example, an electrospinning technique. To form the electrode catalyst layer having the second configuration, the carbon fiber 25 is further added to the catalyst layer slurry.

The solvent for the catalyst layer slurry is not limited to a particular type. Examples of the solvent include water; alcohols such as methanol, ethanol, 1-propanol, 2-propanol, 1-butanol, 2-butanol, isobutyl alcohol, and tert-butyl alcohol; ketones such as acetone, methyl ethyl ketone, methyl propyl ketone, methyl butyl ketone, methyl isobutyl ketone, methyl amyl ketone, pentanone, heptanone, cyclohexanone, methyl cyclohexanone, acetonylacetone, diethyl ketone, dipropyl ketone, and diisobutyl ketone; ethers such as tetrahydrofuran, tetrahydropyran, dioxane, diethylene glycol dimethyl ether, anisole, methoxy toluene, diethyl ether, dipropyl ether, and dibutyl ether; amines such as isopropylamine, butylamine, isobutylamine, cyclohexylamine, diethylamine, and aniline; esters such as propyl formate, isobutyl formate, amyl formate, methyl acetate, ethyl acetate, propyl acetate, butyl acetate, isobutyl acetate, pentyl acetate, isopentyl acetate, methyl propionate, ethyl propionate, and butyl propionate; acetic acid, propionic acid, dimethylformamide, dimethylacetamide, and N-methylpyrrolidone. Examples of glycol and glycol ether solvents include ethylene glycol, diethylene glycol, propylene glycol, ethylene glycol monomethyl ether, ethylene glycol dimethyl ether, ethylene glycol diethyl ether, diacetone alcohol, 1-methoxy-2-propanol, and 1-ethoxy-2-propanol.

The catalyst layers 12A and 12C may be formed using substrates that are, for example, transfer substrates to be peeled off after the catalyst layers 12A and 12C are transferred to the polymer electrolyte membrane 11. The transfer substrates may be, for example, resin films. The catalyst layers 12A and 12C may be formed using the polymer electrolyte membrane 11 or the diffusion layers 13A and 13C as their substrate.

The catalyst layer slurry may be applied to the substrate by any application method. The application method may be, for example, doctor blading, die coating, dipping, screen printing, laminator roll coating, or spraying.

The coating that is the catalyst layer slurry applied on the substrate may be dried by, for example, hot air drying or infrared ray (IR) drying. The drying temperature is preferably about 40°C or more and 200°C or less, and more preferably about 40°C or more and 120°C or less. The drying time is preferably about 0.5 minutes or more and 1 hour or less, and more preferably about 1 minute or more and 30 minutes or less.

When the catalyst layers 12A and 12C are formed using transfer substrates as their substrates, the catalyst layers 12A and 12C are joined to the polymer electrolyte membrane 11 by thermocompression bonding before the transfer substrates are peeled from the catalyst layers 12A and 12C. Then, the diffusion layers 13A and 13C are pressure-bonded to the catalyst layers 12A and 12C on the polymer electrolyte membrane 11. As a result, the membrane electrode assembly 10 is formed.

When the catalyst layers 12A and 12C are formed using the diffusion layers 13Aand 13C as their substrates, the catalyst layers 12A and 12C supported on the diffusion layers 13A and 13C are joined to the polymer electrolyte membrane 11 by thermocompression bonding to form the membrane electrode assembly 10.

When the catalyst layers 12A and 12C are formed using the polymer electrolyte membrane 11 as their substrate, the catalyst layers 12A and 12C are formed directly on the surfaces of the polymer electrolyte membrane 11, and then the diffusion layers 13A and 13C are pressure-bonded to the catalyst layers 12A and 12C. As a result, the membrane electrode assembly 10 is formed.

A production method that forms the catalyst layers 12A and 12C using the polymer electrolyte membrane 11 as their substrate can achieve good adhesion between the polymer electrolyte membrane 11 and the catalyst layers 12A and 12C. Furthermore, the lack of necessity to apply pressure to join the catalyst layers 12A and 12C reduces the likelihood that the catalyst layers 12A and 12C will be crushed. Accordingly, the catalyst layers 12A and 12C are formed preferably using the polymer electrolyte membrane 11 as their substrate.

Because the polymer electrolyte membrane 11 swells and shrinks significantly, the use of the polymer electrolyte membrane 11 as the substrate causes the volume of the substrate to change more greatly during the process of drying the coating to be the catalyst layers 12A and 12C than in the case in which transfer substrates or the diffusion layers 13A and 13C are used as the substrates. Therefore, when an electrode catalyst layer contains no fibrous substance as before, the electrode catalyst layer is likely to crack. In contrast, the catalyst layers 12A and 12C in the present embodiment can reduce cracking due to the contained fibrous substances and are appropriate to the use of the production method that forms the catalyst layers 12A and 12C using the polymer electrolyte membrane 11 as their substrate.

The polymer electrolyte fuel cell 30 is produced by fitting the separators 31A and 31C to the membrane electrode assembly 10 and providing a gas delivery mechanism.

### [Examples]

The above-described membrane electrode assembly and polymer electrolyte fuel cell will be described by means of specific examples and comparative examples.

### (Example 1)

Platinum-supporting carbon (TEC 10E50E manufactured by TANAKAKikinzoku Kogyo K.K.) was used as carbon particles on which catalytic substances are supported. After 20 g of the platinum-supporting carbon was mixed into water, polymer electrolyte fiber (acid-doped polybenzoazoles), polymer electrolyte dispersion (Nafion dispersion manufactured by Wako Pure Chemical Industries, Ltd.), and 1-propanol were added and stirred to prepare catalyst layer slurry. The polymer electrolyte fiber had a mean fiber diameter of 400 nm and a mean fiber length of 30 µm. The mean fiber diameter is expressed as a value obtained by rounding off the measurement to the nearest ten, and the mean fiber length is expressed as a value obtained by rounding off the measurement to the nearest integer.

In the catalyst layer slurry, the mass of the polymer electrolyte was 100% by mass relative to the mass of the carbon particles, and the mass of the polymer electrolyte fiber was 10% by mass relative to the mass of the carbon particles. In the dispersion medium, the water proportion was 50% by mass, and the solid concentration was 10% by mass.

The catalyst layer slurry was applied to a polymer electrolyte membrane (Nafion 212 manufactured by DuPont) by die coating and dried in a furnace at 80°C to provide a laminate of a pair of electrode catalyst layers and a polymer electrolyte membrane. The laminate was sandwiched between two gas diffusion layers to provide a membrane electrode assembly in Example 1. Each gas diffusion layer was a laminate of a carbon substrate and a microporous layer. The gas diffusion layer had a Gurley value of 1.0 second and an electrical resistance of 8.0 mΩ·cm².

In addition, the membrane electrode assembly and a JARI standard cell were used to form a polymer electrolyte fuel cell in Example 1.

### (Example 2)

A membrane electrode assembly and a polymer electrolyte fuel cell in Example 2 were produced using the same materials and process as in Example 1 except that the gas diffusion layers were changed. The gas diffusion layers in Example 2 have a Gurley value of 1.0 second and an electrical resistance of 11.5 mΩ·cm².

### (Example 3)

A membrane electrode assembly and a polymer electrolyte fuel cell in Example 3 were produced using the same materials and process as in Example 1 except that the gas diffusion layers were changed. The gas diffusion layers in Example 3 had a Gurley value of 3.0 seconds and an electrical resistance of 9.8 mΩ·cm².

### (Comparative Example 1)

A membrane electrode assembly and a polymer electrolyte fuel cell in Comparative Example 1 were produced using the same materials and process as in Example 1 except that the gas diffusion layers were changed. The gas diffusion layers in Comparative Example 1 had a Gurley value of 4.5 seconds and an electrical resistance of 11.0 mΩ·cm².

### (Comparative Example 2)

A membrane electrode assembly and a polymer electrolyte fuel cell in Comparative Example 2 were produced using the same materials and process as in Example 1 except that the gas diffusion layers were changed. The gas diffusion layers in Comparative Example 2 had a Gurley value of 5.0 seconds and an electrical resistance of 8.0 mΩ·cm².

### (Comparative Example 3)

A membrane electrode assembly and a polymer electrolyte fuel cell in Comparative Example 3 were produced using the same materials and process as in Example 1 except that the gas diffusion layers were changed. The gas diffusion layers in Comparative Example 3 had a Gurley value of 5.0 seconds and an electrical resistance of 15.0 mΩ·cm².

### (Comparative Example 4)

A membrane electrode assembly and a polymer electrolyte fuel cell in Comparative Example 4 were produced using the same materials and process as in Example 1 except that the gas diffusion layers were changed. The gas diffusion layers in Comparative Example 4 had a Gurley value of 17.0 seconds and an electrical resistance of 10.4 mΩ·cm².

### (Comparative Example 5)

A membrane electrode assembly and a polymer electrolyte fuel cell in Comparative Example 5 were produced using the same materials and process as in Example 1 except that no polymer electrolyte fiber was added to the catalyst layer slurry.

### (Evaluation Method)

### <Crack>

In each example and each comparative example, the surface of the electrode catalyst layer was observed with a microscope (magnification: 200x) to check for any cracking. The condition in which any crack with a length of 10 µm or more appeared was rated as poor, whereas the condition in which no crack with a length of 10 µm or more appeared was rated as good.

### <Power Generation Performance>

A single cell used for evaluation was a JARI standard cell defined in "Cell Evaluation and Analysis Protocol," which was published by New Energy and Industrial Technology Development Organization (NEDO), and made by placing a gasket and a separator on either side of the membrane electrode assembly and pressing them together from both sides under a predetermined pressure. The I-V measurement described in "Cell Evaluation and Analysis Protocol" was conducted under standard conditions to determine the maximum output density.

### (Evaluation Results)

Table 1 shows the evaluation results for the Gurley value, the electrical resistance, the crack resistance, and the power generation performance of the gas diffusion layer in each example and each comparative example. For Comparative Example 5, in which the electrode catalyst layer was cracked, the power generation performance was not evaluated.

**[Table 1]**

| | Gurley value | Electrical resistance (mΩ·cm²) | Maximum output density (mW/cm²) | Crack resistance |
|---|---|---|---|---|
| Example 1 | 1.0 | 8.0 | 846 | Good |
| Example 2 | 1.0 | 11.5 | 843 | Good |
| Example 3 | 3.0 | 9.8 | 843 | Good |
| Comp. Ex. 1 | 4.5 | 11.0 | 823 | Good |
| Comp. Ex. 2 | 5.0 | 8.0 | 840 | Good |
| Comp. Ex. 3 | 5.0 | 15.0 | 794 | Good |
| Comp. Ex. 4 | 17.0 | 10.4 | 788 | Good |
| Comp. Ex. 5 | 1.0 | 8.0 | - | Poor |

As listed in Table 1, cracking was prevented in Examples 1 to 3 and Comparative Examples 1 to 4, in which the electrode catalyst layer contained the polymer electrolyte fiber, whereas cracking was found in Comparative Example 5, in which the electrode catalyst layer contained no fibrous substance. Thus, it was confirmed that fibrous substances contained in an electrode catalyst layer were capable of preventing cracking.

A comparison between Example 1 and Example 2, in which the Gurley value is 1.0 second, indicates that the same level of power generation performance is achieved even with a difference in electrical resistance. Moreover, the same level of power generation performance as in Examples 1 and 2 has been achieved also in Example 3, in which the Gurley value is 3.0 seconds. However, a comparison between Comparative Example 2 and Comparative Example 3, in which the Gurley value is 5.0 seconds, indicates that in Comparative Example 3, in which the electrical resistance is higher, the maximum output density is lower, or the power generation performance is lower. Additionally, a comparison between Example 2 and Comparative Example 1 indicates that in Comparative Example 1, in which the Gurley value is greater, the power generation performance is lower even with the same level of electrical resistance. In Comparative Example 4, in which the Gurley value is much greater than in the other examples, the power generation performance is significantly lower regardless of the electrical resistance being lower than in Comparative Example 1 and Comparative Example 3.

These findings suggest that both the air permeability and the electrical resistance of a gas diffusion layer affect the power generation performance, and the effect of the air permeability is greater. It is further suggested that when the air permeability is sufficiently high, the level of electrical resistance is less likely to affect the power generation performance. More specifically, the findings indicate that when the gas diffusion layer has a Gurley value of 1.0 second or more and 3.0 seconds or less, high power generation performance can be consistently achieved even with variations and fluctuations in electrical resistance.

As described above by means of the examples, the membrane electrode assembly and the polymer electrolyte fuel cell according to the above embodiment achieve the advantageous effects described below.
(1) Since the catalyst layers 12A and 12C include the fibrous substances, the catalyst layers 12A and 12C have greater strength to prevent cracking. Additionally, since the diffusion layers 13A and 13C each have a Gurley value of 1.0 second or more and 3.0 seconds or less, sufficient gas diffusion properties and drainage properties are achieved, thus reducing the effect of the electrical resistance of the diffusion layers 13A and 13C on the power generation performance of the fuel cell. Accordingly, the polymer electrolyte fuel cell 30 provides stable power generation performance regardless of any unevenness in the electrical resistance of the diffusion layers 13A and 13C.
(2) Since the catalyst layers 12A and 12C include the polymer electrolyte fiber 24 having proton conductivity, the catalyst layers 12A and 12C have higher proton conductivity. In addition, since the catalyst layers 12A and 12C include the carbon fiber 25, the catalyst layers 12A and 12C have higher electron conductivity. When the carbon material for the carbon fiber 25 is any one of carbon fibers, carbon nanofibers, and carbon nanotubes, the catalyst layers 12A and 12C have electron conductivity increased appropriately.
(3) When the fibrous substances have a mean fiber diameter of 0.1 µm or less, the fibrous substances are thin enough to be included in the catalyst layers 12A and 12C. When the fibrous substances have a mean fiber length of 1 µm or more and 200 µm or less, the fibrous substances are entangled appropriately in the catalyst layers 12A and 12C, and this structure increases the strength of the catalyst layers 12A and 12C and also the effectiveness of suppression of cracking.
(4) When the mass of the polymer electrolyte fibers 24 included in the catalyst layers 12A and 12C is 0.01 times or more and 0.3 times or less the mass of the carbon particles 22, proton conduction in the catalyst layers 12A and 12C is promoted, thus contributing to an improvement in the output of the polymer electrolyte fuel cell 30.
(5) When the catalytic substances 21 have a mean particle diameter of 0.5 nm or more and 20 nm or less, the catalytic stability and activity increase. When the carbon particles 22 have a mean particle diameter of 10 nm or more and 1,000 nm or less, electron conduction paths are more likely to be formed in the catalyst layers 12A and 12C, and also the catalyst layers 12A and 12C may be formed thin enough that electrical resistance does not become excessive, thus preventing a decrease in the output of the fuel cell.

## Claims

1. A membrane electrode assembly comprising:
a polymer electrolyte membrane;
a pair of electrode catalyst layers with the polymer electrolyte membrane therebetween, the electrode catalyst layers being in contact with surfaces of the polymer electrolyte membrane; and
a gas diffusion layer laminated on each of the pair of electrode catalyst layers;
wherein each of the pair of electrode catalyst layers includes catalytic substances, carbon particles, polymer electrolyte aggregates, and fibrous substances, and
the gas diffusion layer has a Gurley value of 1.0 second or more and 3.0 seconds or less, the Gurley value representing air permeability in a thickness direction.

2. The membrane electrode assembly according to claim 1, wherein
each of the pair of electrode catalyst layers includes, as the fibrous substances, at least one of polymer electrolyte fibers having proton conductivity, and carbon fibers.

3. The membrane electrode assembly according to claim 2, wherein
the carbon fibers comprise a carbon material being any one of carbon fibers, carbon nanofibers, and carbon nanotubes.

4. The membrane electrode assembly according to any one of claims 1 to 3, wherein
the fibrous substances have a mean fiber diameter of 0.1 µm or less, and the fibrous substances have a mean fiber length of 1 µm or more and 200 µm or less.

5. The membrane electrode assembly according to any one of claims 1 to 4, wherein
each of the pair of electrode catalyst layers includes, as the fibrous substances, polymer electrolyte fibers having proton conductivity, and
the polymer electrolyte fibers included in each of the electrode catalyst layers are 0.01 times or more and 0.3 times or less in mass the carbon particles included in each of the electrode catalyst layers.

6. The membrane electrode assembly according to any one of claims 1 to 5, wherein
the catalytic substances are particulate, and the catalytic substances have a mean particle diameter of 0.5 nm or more and 20 nm or less.

7. The membrane electrode assembly according to any one of claims 1 to 6, wherein
the carbon particles have a mean particle diameter of 10 nm or more and 1,000 nm or less.

8. A polymer electrolyte fuel cell comprising:
a membrane electrode assembly according to any one of claims 1 to 7; and
a pair of separators with the membrane electrode assembly therebetween.
